# EUROPEAN PATENT SPECIFICATION

(11) **EP 4 202 621 B1**
(45) Date of publication and mention of the grant of the patent: **04.11.2026**
(21) Application number: 22774014.9
(22) Date of filing: 03.03.2022
(51) Int. Cl.: G06F 3/0484, G06F 3/0488, G06F 1/3234, G06F 1/3212

(54) **METHOD FOR ALWAYS ON DISPLAYING, AND ELECTRONIC DEVICE**
VERFAHREN ZUR IMMER EINGESCHALTETEN ANZEIGE UND ELEKTRONISCHE VORRICHTUNG
PROCÉDÉ D'AFFICHAGE PERMANENT, ET DISPOSITIF ÉLECTRONIQUE

(30) Priority: 26.03.2021 CN 202110326182
(43) Date of publication of application: 28.06.2023
(73) Proprietor: Honor Device Co., Ltd., Shenzhen, Guangdong 518040 (CN)
(72) Inventor: ZHANG, Xiaohang, Shenzhen, Guangdong 518040 (CN); HUANG, Liwei, Shenzhen, Guangdong 518040 (CN); YANG, Shishu, Shenzhen, Guangdong 518040 (CN); REN, Jie, Shenzhen, Guangdong 518040 (CN)
(74) Representative: Epping - Hermann - Fischer
(86) International application number: PCT/CN2022/079146
(87) International publication number: WO 2022/199352

(56) References cited:
- CN-A- 109 361 593
- CN-A- 110 221 898
- CN-A- 110 989 882
- CN-A- 112 363 785
- US-A1- 2021 083 498

## Description

This application claims priority to Chinese Patent Application No. 202110326182.1, filed with the China National Intellectual Property Administration on March 26, 2021 and entitled "ALWAYS ON DISPLAY METHOD AND ELECTRONIC DEVICE.

### TECHNICAL FIELD

This application relates to the field of electronic device technologies, and in particular, to an always on display method and an electronic device.

### BACKGROUND

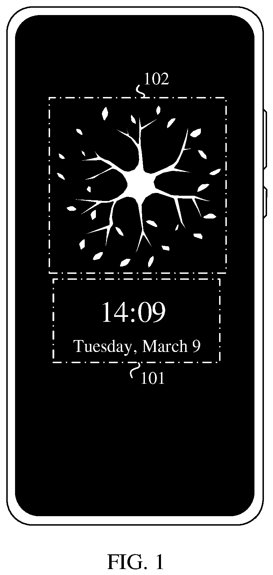

AOD (Always On Display), also referred to as always on display, always on display, or always on display, is a function in which an electronic device displays time, incoming call information, push messages, and other information in a limited part of a screen without keeping the full screen on. For example, the electronic device is a mobile phone. With the always on display function enabled, the mobile phone can display time, date, and other information in an area 101 of the screen after the screen is off, as shown in FIG. 1. In this way, a user is still able to obtain information such as time and date when the mobile phone is screen-off.

In some scenarios, after the screen is off, the mobile phone can still display a preset screen-off animation in an area 102 of the screen, as shown in FIG. 1. For example, the screen animation may be a video with duration of 3s. After displaying of the screen-off animation is completed, the mobile phone may freeze the last frame of image of the screen-off animation. Such always on display method, although improving user's visual experience to some extent, features a monotonous display mode, which makes always on display content not real-time and not interesting.

US 2021/0083498 A1 relates to an electronic device comprising a battery; a display; at least one processor; and a memory, wherein the memory stores instructions which, when executed, cause the at least one processor to: based on a charging start event being detected, identify a charging scheme for the battery and a state of the display; in response to the charging scheme being a first charging scheme, display a graphic object on the display using a first display scheme indicating the first charging scheme based on the state of the display; and in response to the charging scheme being a second charging scheme, display the graphic object on the display using a second display scheme indicating the second charging scheme based on the state of the display.

### SUMMARY

This application provides an always on display method and an electronic device, to perform always on display based on a usage status of the electronic device, so that the usage status of the electronic device is more vividly and effectively conveyed to a user in a screen-off state, to make always on display content more real-time and interesting. The invention is set out in the appended claims.

### BRIEF DESCRIPTION OF DRAWINGS

FIG. 1 is a schematic diagram of an application scenario of an always on display function in the conventional technology;
FIG. 2 is schematic diagram 1 of a structure of an electronic device according to an embodiment of this application;
FIG. 3 is schematic flowchart 1 of an always on display method according to an embodiment of this application;
FIG. 4 is schematic flowchart 2 of an always on display method according to an embodiment of this application;
FIG. 5 is schematic flowchart 3 of an always on display method according to an embodiment of this application;
FIG. 6 is schematic diagram 1 of an application scenario of an always on display method according to an embodiment of this application;
FIG. 7 is schematic diagram 2 of an application scenario of an always on display method according to an embodiment of this application;
FIG. 8 is schematic diagram 3 of an application scenario of an always on display method according to an embodiment of this application;
FIG. 9 is schematic diagram 4 of an application scenario of an always on display method according to an embodiment of this application;
FIG. 10 is schematic diagram 5 of an application scenario of an always on display method according to an embodiment of this application;
FIG. 11 is schematic flowchart 4 of an always on display method according to an embodiment of this application;
FIG. 12 is schematic flowchart 5 of an always on display method according to an embodiment of this application;
FIG. 13 is schematic diagram 6 of an application scenario of an always on display method according to an embodiment of this application;
FIG. 14 is schematic flowchart 6 of an always on display method according to an embodiment of this application;
FIG. 15 is schematic flowchart 7 of an always on display method according to an embodiment of this application;
FIG. 16 is schematic flowchart 8 of an always on display method according to an embodiment of this application;
FIG. 17 is schematic flowchart 9 of an always on display method according to an embodiment of this application;
FIG. 18 is schematic flowchart 10 of an always on display method according to an embodiment of this application;
FIG. 19 is schematic diagram 7 of an application scenario of an always on display method according to an embodiment of this application;
FIG. 20 is schematic flowchart 11 of an always on display method according to an embodiment of this application; and
FIG. 21 is schematic diagram 2 of a structure of an electronic device according to an embodiment of this application.

### DESCRIPTION OF EMBODIMENTS

The following terms "first" and "second" are merely used for description, but should not be understood as indicating or implying relative importance or implying a quantity of indicated technical features. Therefore, a feature limited by "first" or "second" may explicitly or implicitly include one or more features. In descriptions of embodiments, unless otherwise stated, "a plurality of" means two or more.

The following describes implementation of embodiments in detail with reference to accompanying drawings.

For example, an always on display method provided in embodiments of this application can be applied to a mobile phone, an in-vehicle device (also referred to as a vehicle-mounted device), a tablet computer, a notebook computer, an ultra-mobile personal computer (ultra-mobile personal computer, UMPC), a handheld computer, a netbook, a personal digital assistant (personal digital assistant, PDA), a wearable electronic device, a virtual reality device, or another electronic device with an always on display function, which are not limited in embodiments of this application.

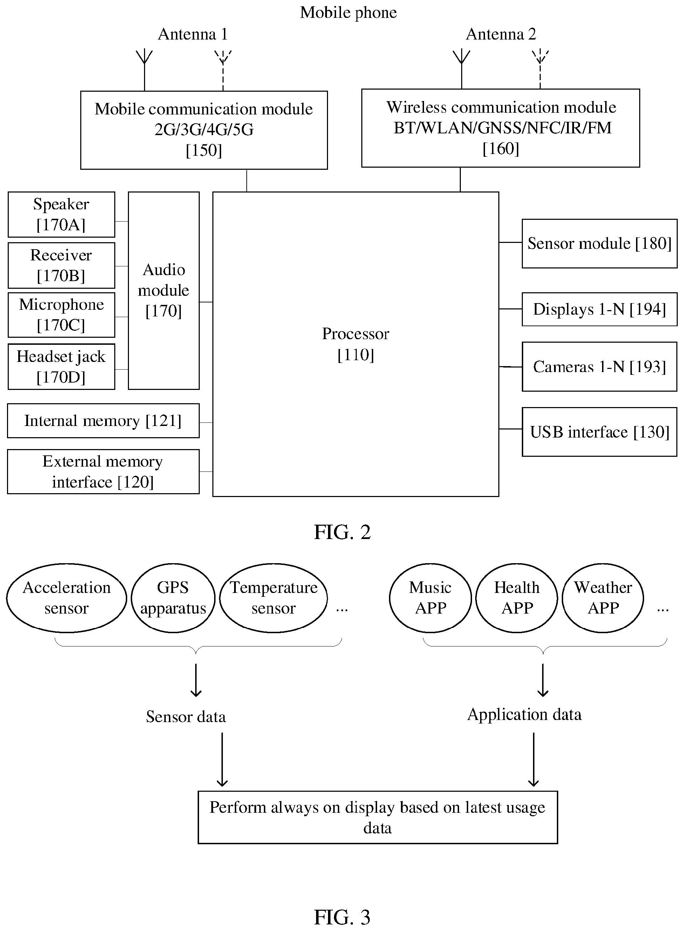

For example, the foregoing electronic device is a mobile phone. FIG. 2 is a schematic diagram of a structure of a mobile phone.

The mobile phone may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, and the like.

It may be understood that the structure illustrated in this embodiment of this application does not constitute a specific limitation on the mobile phone. In some other embodiments of this application, the mobile phone may include more or fewer components than those shown in the figure, or combine some components, or split some components, or have different component arrangements. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices or may be integrated into one or more processors.

The processor 110 may be further provided with a memory, configured to store an instruction and data. In some embodiments, the memory in the processor 110 is a cache. The memory can store an instruction or data that the processor 110 has just used or used cyclically. If the processor 110 needs to use the instruction or data again, the instruction or data can be directly invoked from the memory. Repeated access is avoided, and a waiting time of the processor 110 is reduced, thereby improving system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like.

A wireless communication function of the mobile phone may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the mobile phone may be configured to cover one or more communication frequency bands. Different antennas may be further multiplexed, to improve antenna utilization. For example, the antenna 1 may be multiplexed into a diversity antenna of a wireless local area network. In some other embodiments, the antenna may be used together with a tuning switch.

The mobile communication module 150 may provide a solution to wireless communication such as 2G/3G/4G/5G applied to the mobile phone. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit a processed electromagnetic wave to the modem processor for demodulation. The mobile communications module 150 may further amplify a signal that is modulated by the modem processor, and convert the signal into an electromagnetic wave and radiate the electromagnetic wave by using the antenna 1. In some embodiments, at least some of function modules in the mobile communication module 150 may be disposed in the processor 110. In some embodiments, at least some of function modules in the mobile communication module 150 may be disposed in a same device as at least some of modules in the processor 110.

The wireless communication module 160 may provide a solution to wireless communication applied to the mobile phone, for example, a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave by using the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, in the mobile phone, the antenna 1 is coupled to the mobile communication module 150, and the antenna 2 is coupled to the wireless communication module 160, so that the mobile phone can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or satellite based augmentation systems (satellite based augmentation systems, SBAS).

The mobile phone implements a display function by using the GPU, a display 194, the application processor, and the like. The GPU is an image processing microprocessor, which is connected to the display 194 and the application processor. The GPU is configured to perform mathematical and geometric calculations to render graphics. The processor 110 may include one or more GPUs, and the processor 110 executes program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some embodiments, the mobile phone may include 1 or N displays 194, where N is a positive integer greater than 1.

Using an OLED display as an example, one OLED display may include a plurality of OLED pixel units arranged in an array. As shown in FIG. 2, each OLED pixel unit includes a cathode, an anode, and an electron transport layer, a hole transport layer and a light-emitting layer that are located between the cathode and the anode. The cathode may be a metal electrode, and the anode may be an ITO (indium tin oxide, indium tin oxide) transparent electrode.

After a driving voltage V is input to the cathode and the anode, under an action of the driving voltage V, electrons are transferred from the cathode to the electron transport layer, and holes are injected from the anode to the hole transport layer. The electrons and holes meet in the light-emitting layer to produce excitons, which excite light-emitting molecules in the light-emitting layer, to generate a light source after radiation. Different driving voltages V can excite corresponding OLED pixel units to present different colors and luminance. In this way, the OLED pixel units in the OLED display can display pictures corresponding to different driving voltages.

Organic materials in the electron transport layer, the hole transport layer, and the light-emitting layer will gradually age with use. A phenomenon of a ghost image on the OLED display is actually the result of faster depletion of active materials from OLED pixel units at a specific position than other positions because the pixel units at that position are always displaying a same still image over a long time, and such faster depletion causes faster attenuation of emitting efficiency, so as to leave the ghost image on the OLED display.

The mobile phone can implement a photographing function by using the ISP, a camera 193, the video codec, the GPU, the display 194, the application processor, and the like.

The ISP is configured to process data fed back by the camera 193. For example, during photographing, a shutter is pressed, light is transmitted to a photosensitive element of the camera by using a lens, an optical signal is converted into an electrical signal, and the photosensitive element of the camera transfers the electrical signal to the ISP for processing, so that the electrical signal is converted into an image visible to a naked eye. The ISP can further optimize algorithms for noise, brightness, and a skin color of the image. The ISP can further optimize parameters such as exposure and a color temperature in a photographing scenario. In some embodiments, the ISP may be provided in the camera 193.

The camera 193 is configured to capture a still image or a video. An optical image of an object is generated through a lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert into a digital image signal. The ISP outputs the digital image signal to the DSP for processing. The DSP converts the digital image signal into an image signal in a standard format such as RGB or YUV. In some embodiments, the mobile phone may include 1 or N cameras 193, and N is a positive integer greater than 1.

The digital signal processor is configured to process a digital signal, and may further process another digital signal in addition to a digital image signal. For example, when the mobile phone selects a frequency, the digital signal processor is configured to perform Fourier transformation and the like on frequency energy.

The video codec is configured to compress or decompress a digital video. The mobile phone may support one or more video codecs. In this way, the mobile phone may play or record videos in a plurality of encoding formats, for example, moving picture experts group (moving picture experts group, MPEG) 1, MPEG 2, MPEG 3, and MPEG 4.

The external memory interface 120 may be configured to connect to an external storage card such as a Micro SD card, to expand a storage capability of the mobile phone. The external storage card communicates with the processor 110 by using the external memory interface 120, to implement a data storage function, For example, a file such as music or a video is stored in the external storage card.

The internal memory 121 may be configured to store computer executable program code, where the executable program code includes instructions. The processor 110 executes various function applications and data processing of the mobile phone by running instructions stored in the internal memory 121. The internal memory 121 may include a program storage area and a data storage area. The program storage area may store an operating system, an application required by at least one function (such as a sound play function and an image display function), and the like. The data storage area may store data (such as audio data and an address book) created during use of the mobile phone, and the like. In addition, the internal memory 121 may include a high-speed random access memory, and may further include a non-volatile memory such as at least one magnetic disk memory, a flash memory, or a universal flash storage (universal flash storage, UFS).

The mobile phone can implement audio functions (such as music playing and sound recording) by using the audio module 170, the speaker 170A, the receiver 170B, the microphone 170C, the headset jack 170D, the application processor, and the like.

The audio module 170 is configured to convert digital audio information into an analog audio signal for outputting, and is further configured to convert an analog audio input into a digital audio signal. The audio module 170 may be further configured to encode and decode audio signals. In some embodiments, the audio module 170 may be disposed in the processor 110 or some of function modules of the audio module 170 may be disposed in the processor 110.

The speaker 170A, also referred to as a "horn", is configured to convert an audio electrical signal into a sound signal. The mobile phone may be used to listen to music or answer a hands-free call by using the speaker 170A.

The receiver 170B, also referred to as an "earpiece", is configured to convert an audio electrical signal into a sound signal. When the mobile phone is used to answer a call or receive voice information, the receiver 170B may be put close to the ear, to receive voice.

The microphone 170C, also referred to as a "mic" or "mike", is configured to convert a sound signal into an electrical signal. When making a call or sending voice information, a user may produce sound with the mouth approaching the microphone 170C, to input a sound signal to the microphone 170C. One or more microphones 170C may be disposed in the mobile phone. In some other embodiments, two microphones 170C may be disposed in the mobile phone, to implement a noise reduction function in addition to collecting a sound signal. In some other embodiments, three, four, or more microphones 170C may alternatively be disposed in the mobile phone, to recognize a sound source, implement a directional recording function, and the like in addition to collecting a sound signal and implementing noise reduction.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

Certainly, the mobile phone may further include a charging management module, a power management module, a power supply, a button, an indicator, one or more SIM card interfaces, and the like. This is not limited in this embodiment of this application.

Still in the example in which the foregoing electronic device is a mobile phone, as shown in FIG. 3, the mobile phone may use the sensors in the above sensor module to collect corresponding sensor data. For example, the mobile phone may use a GPS apparatus to obtain a location of the user. For another example, the mobile phone may use the acceleration sensor and a gravity sensor to obtain a user step count. For another example, the mobile phone may use the temperature sensor to obtain a temperature of an environment in which the user is located.

Still as shown in FIG. 3, applications (application, APP) such as weather, calendar, music, or health can also be installed on the mobile phone. The mobile phone may also obtain corresponding application data from these applications. For example, the mobile phone can obtain power information of the mobile phone through a battery function in a settings APP. For another example, the mobile phone can learn whether the mobile phone is playing music through the music APP. For another example, the mobile phone can obtain health data such as the step count and heart rate of the user through the health APP.

In embodiments of this application, the foregoing sensor data and/or application data may be referred to as usage data of the mobile phone, and the usage data may be used to reflect a usage status of the mobile phone. Still as shown in FIG. 3, when the mobile phone is screen-off (also referred to as being screen-off, screen-off, screen-locked, or screen-sleep), the mobile phone can perform always on display based on latest usage data, so that always on display content displayed by the mobile phone in a screen-off state is associated with a latest usage status of the mobile phone.

For example, when the latest usage data of the mobile phone indicates that the mobile phone is playing music, the mobile phone can display a screen-off animation 1 of a dancing bear after the screen is off. For another example, when the latest usage data of the mobile phone indicates that the user step count is greater than a preset value, the mobile phone can display a screen-off animation 2 of an exercising bear after the screen is off. For another example, when the latest usage data of the mobile phone indicates that power of the mobile phone is less than a preset value, the mobile phone can display a screen-off animation 3 of a bear lying down after the screen is off. In this way, by displaying a screen-off animation associated with the usage data of the mobile phone, the mobile phone in the screen-off state is still able to convey the latest usage status of the mobile phone to the user. This not only makes interaction between the mobile phone and the user more interesting, but also effectively presents the latest usage status (such as a power level and whether the mobile phone is playing music) of the mobile phone to the user in a visual and vivid way, thereby improving user experience.

Certainly, the mobile phone in the screen-off state may alternatively convey the usage status of the mobile phone to the user in other manners such as displaying text or a picture associated with the usage data of the mobile phone. This is not limited in this embodiment of this application.

The always on display method provided by embodiments of this application is described in detail below with reference to the accompanying drawings. The following embodiments are all described by using an example in which the electronic device with an always on display function is a mobile phone.

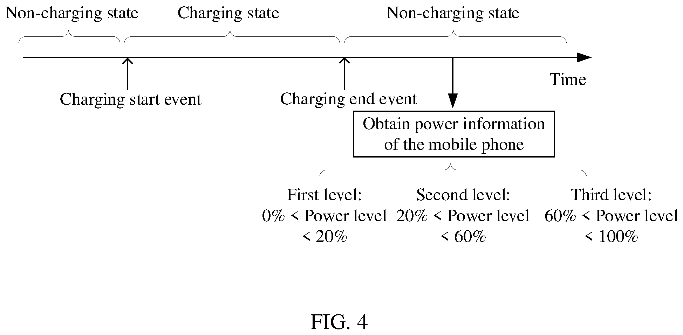

For example, the mobile phone may be provided with a power management unit, and the power management unit is capable of monitoring a charging status of the mobile phone in real time. For example, the power management unit may be a power manager service (PowerManagerService, PMS) in the mobile phone. When the mobile phone is connected to a USB or wireless charging apparatus, a charging start event may be reported to the PMS. Correspondingly, when the mobile phone is disconnected from the USB or wireless charging apparatus, a charging end event may be reported to the PMS. Then, as shown in FIG. 4, when obtaining the charging start event and no charging end event, the PMS can determine that the mobile phone is in a charging state. Otherwise, the PMS can determine that the mobile phone is in a non-charging state.

In some embodiments, the foregoing power management unit (for example, PMS) may further monitor power information of the mobile phone in real time, and then determine a specific level of power of the mobile phone based on the power information of the mobile phone. For example, three levels may be defined in advance for the power of the mobile phone. The first level is 0% < the power ≤ 20%, which is a low battery state; the second level is 20% < the power ≤ 60%, which is a medium battery state; and the third level is 60% < the power ≤ 100%, which is a high battery state. Certainly, persons skilled in the art may alternatively define more or fewer levels for the power of the mobile phone based on actual needs or actual application scenarios. Still as shown in FIG. 3, after determining that the mobile phone is in the non-charging state, the power management unit may further determine that current power of the mobile phone is in the first level, the second level, or the third level based on newly obtained power information.

In embodiments of this application, when entering the screen-off state, the mobile phone can obtain a latest charging status and power information of the mobile phone according to the foregoing method, and then display different screen-off animations (or screen-off animation groups) in the screen-off state based on the latest charging status and power information of the mobile phone. In this way, a current battery state of the mobile phone can be vividly and visually conveyed to a user through different screen-off animations (or screen-off animation groups), so that the user can visually and vividly learn the battery state of the mobile phone when the mobile phone is screen-off, and the always on display becomes more interesting.

The screen-off animation group refers to a group of screen-off animations. That is, the screen-off animation group may include a plurality of screen-off animations, and each screen-off animation is a video of specific duration. For example, duration of each screen-off animation may be 3s.

For example, the plurality of screen-off animations in the screen-off animation group may belong to a same subject, for example, three screen-off animations in a screen-off animation group A are animations of a subject of a dancing bear. That is, an animation object (such as a character or an animal) of each screen-off animation in a same screen-off animation group may be the same, and an event performed by the animation object may be the same. By using the plurality of screen-off animations in the screen-off animation group, an entire process in which the animation object performs an event (such as the dancing bear) can be presented more fully and vividly.

For example, the plurality of screen-off animations in the screen-off animation group may be continuous, for example, the screen-off animation group A includes the screen-off animation 1 and the screen-off animation 2, and the last frame of image of the screen-off animation 1 may be the same as or similar to the first frame of image of the screen-off animation 2. For another example, the last frame of image of the screen-off animation 2 may be the same as or similar to the first frame of image of the screen-off animation 1, so that the screen-off animation 1 and the screen-off animation 2 may be seamlessly connected when the screen-off animation group is played circularly, and a phenomenon such as a sudden image change does not occur to affect user experience.

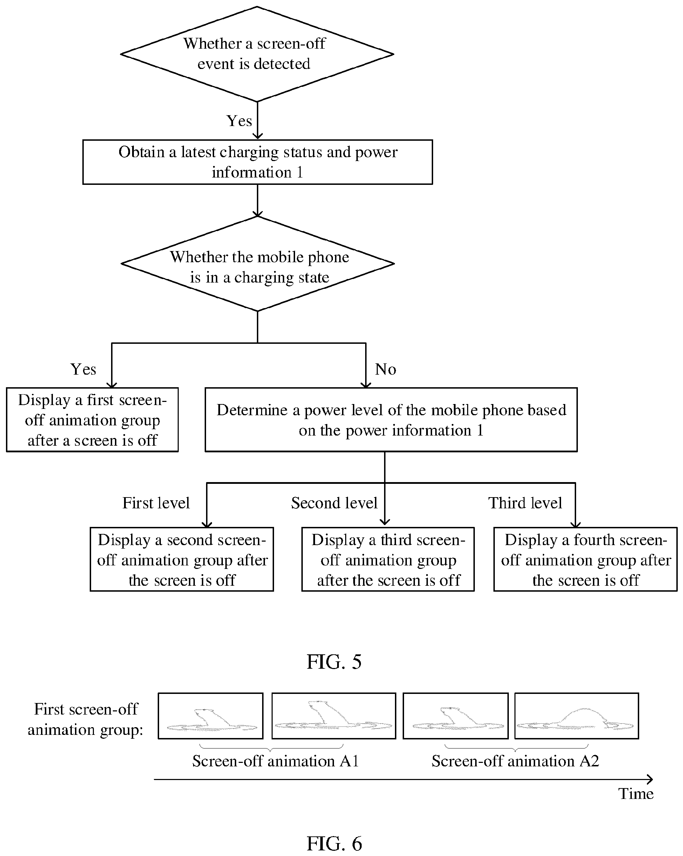

In some embodiments, as shown in FIG. 5, the mobile phone may receive a screen-off event input by the user, and the screen-off event may be used to trigger the mobile phone to enter a screen-off state. For example, the screen-off event may be an event that the user presses a power button when the mobile phone is screen-on. For another example, the screen-off event may be an event that no user operation is detected within a time period when the mobile phone is screen-on.

Still as shown in FIG. 5, if the mobile phone detects the screen-off event, the mobile phone can obtain the latest charging status and power information 1 according to the foregoing method. If the mobile phone is in the charging state, regardless of the battery level of the mobile phone, after the screen is off, the mobile phone may display a first screen-off animation group associated with the charging state. A plurality of screen-off animations in the first screen-off animation group may convey the charging state of the mobile phone to the user.

For example, as shown in FIG. 6, the first screen-off animation group may be used to display a polar bear swimming in a lake. The first screen-off animation group may include a screen-off animation A1 and a screen-off animation A2. The screen-off animation A1 and the screen-off animation A2 may be two different stages when the polar bear swims in the lake. Certainly, the first screen-off animation may be a process in which a cat sleeps on the grass, or the like. In this way, the charging state of the mobile phone can be conveyed to the user through relatively leisurely animations such as swimming and sleeping, so that the user can visually and vividly learn that the mobile phone is currently in the charging state.

Still as shown in FIG. 5, if the mobile phone is in the non-charging state, the mobile phone may determine a specific level of the power of the mobile phone based on a newly obtained power information 1. For example, if 0% < the power information 1 ≤ 20%, the mobile phone may determine that the power of the mobile phone is at the first level, that is, a low battery state, and after the screen is off, the mobile phone can display a second screen-off animation group associated with the first level of power information.

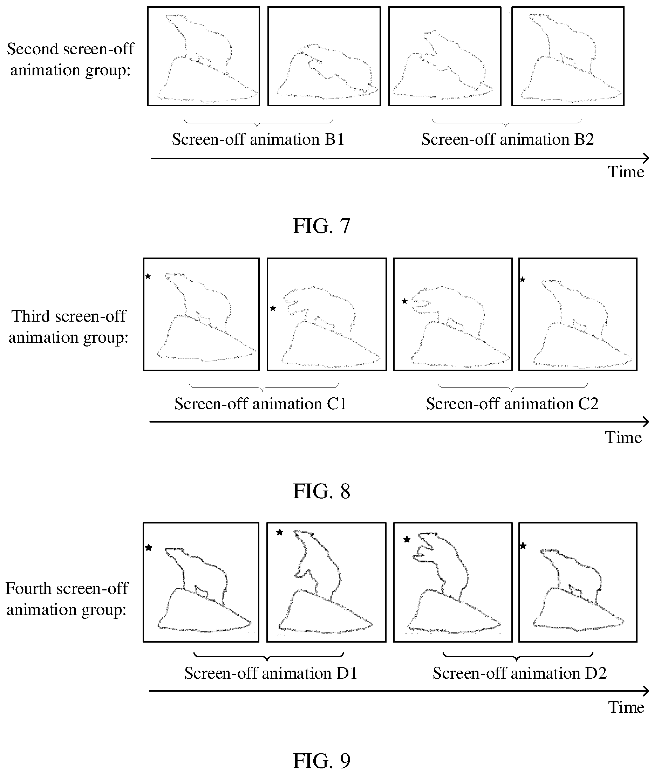

For example, as shown in FIG. 7, the second screen-off animation group may be used to display a polar bear lying on the ice and looking up at the sky. The second screen-off animation group may include a screen-off animation B1 and a screen-off animation B2. The screen-off animation B1 and the screen-off animation B2 may be two different stages of the polar bear lying on the ice and looking up the sky. In the second screen-off animation group, a moving speed (for example, V1) of the polar bear may be lower, or a moving range (A1) of the polar bear may be smaller, so that the polar bear looks more tired, to visually and vividly convey information to the user that the phone is in a low battery state.

Still as shown in FIG. 5, if 20% < the power information 1 ≤ 60%, the mobile phone may determine that the power of the mobile phone is at the second level, that is, a medium battery state, and after the screen is off, the mobile phone can display a third screen-off animation group associated with power information of the second level.

Similarly, as shown in FIG. 8, the third screen-off animation may be a process in which a polar bear on the ice interacts with a shooting star or another object. The third screen-off animation group may include a screen-off animation C1 and a screen-off animation C2. The screen-off animation C1 and the screen-off animation C2 may be two different stages of the polar bear on the ice interacting with a shooting star. A moving speed (for example, V2) of the polar bear in the third screen-off animation group may be higher than the moving speed of the polar bear in the second screen-off animation group, that is, V2 > V1. Alternatively, a moving range (for example, A2) of the polar bear in the third screen-off animation group may be larger than the moving range of the polar bear in the second screen-off animation group, that is, A2 > A1. In this way, compared with the second screen-off animation group, the polar bear in the third screen-off animation group looks more energetic, thereby visually and vividly conveying information to the user that the mobile phone is in a medium battery state.

Still as shown in FIG. 5, if 60% < the power information 1 ≤ 100%, the mobile phone may determine that the power of the mobile phone is at the third level, that is, a high battery state, and after the screen is off, the mobile phone can display a fourth screen-off animation group associated with power information of the third level.

Similarly, as shown in FIG. 9, the fourth screen-off animation group may be used to display a polar bear standing on the ice and interacting with a shooting star or another object. The fourth screen-off animation group may include a screen-off animation D1 and a screen-off animation D2. The screen-off animation D1 and the screen-off animation D2 may be two different stages of the polar bear standing on the ice and interacting with a shooting star. A moving speed (for example, V3) of the polar bear in the fourth screen-off animation group may be higher than the moving speed of the polar bear in the third screen-off animation group, that is, V3 > V2. Alternatively, a moving range (for example, A3) of the polar bear in the fourth screen-off animation group may be larger than the moving range of the polar bear in the third screen-off animation group, that is, A3 > A2. In this way, compared with the third screen-off animation group, the polar bear in the fourth screen-off animation group looks even more energetic, thereby visually and vividly conveying information to the user that the mobile phone is in a high battery state.

It can be learned that when entering the screen-off state, the mobile phone may display, based on the charging status and power information of the mobile phone, a corresponding screen-off animation group after the screen is off, to convey a current battery state of the mobile phone to the user by using a screen-off animation in the corresponding screen-off animation group. In this way, when the mobile phone is in the screen-off state, the user can visually and effectively learn the current battery state of the mobile phone from content of the animation in the screen-off animation group, to make always on display content more real-time and interesting.

It should be noted that the forgoing embodiment is described by using an example in which the screen-off animation group includes two screen-off animations. It may be understood that any screen-off animation group may include two or more screen-off animations. This is not limited in this embodiment of this application.

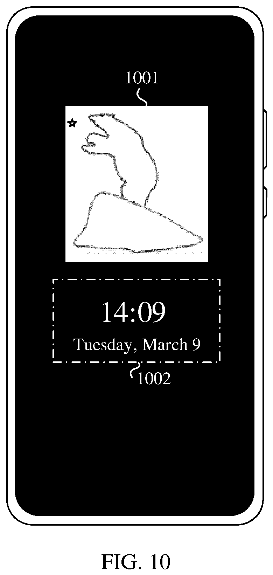

For example, as shown in FIG. 10, after entering the screen-off state, the mobile phone can display a corresponding screen-off animation in a first area 1001 of the screen. In addition, after entering the screen-off state, the mobile phone may also display the current time or date or an icon of a notification message in a second area 1002. Certainly, the mobile phone can also display a fingerprint recognition area or the like in the screen-off state. This is not limited in this embodiment of this application.

In some embodiments, the user may set a plurality of display modes for the always on display function of the mobile phone, such as all-day display, timed display, or display upon touch. In the all-day display mode, when the mobile phone enters the screen-off state at any time of a day, the foregoing screen-off animation and like content need to be displayed. In the timed display mode, if the mobile phone enters the screen-off state within a time range set by the user, the foregoing screen-off animation and like content need to be displayed. For example, the user sets the always on display function to be enabled in the time range of 8:00-18:00. Then, after the mobile phone detects a screen-off event, if a current time is between 8:00-18:00, the foregoing screen-off animation and like content may be displayed after the screen is off. Otherwise, the mobile phone may enter a screen sleep state. In the display upon touch mode, after the mobile phone enters the screen-off state, the foregoing screen-off animation and like content are displayed in fixed time. If a touch operation of the user is not detected, the mobile phone may stop displaying the foregoing screen-off animation and like content and enter the screen sleep state. Correspondingly, if a touch operation of the user is detected in the screen sleep state, the mobile phone may display the foregoing screen-off animation and like content again. The mobile phone in the screen sleep state generally does not display any content on the display, so that the entire display area of the display appears black.

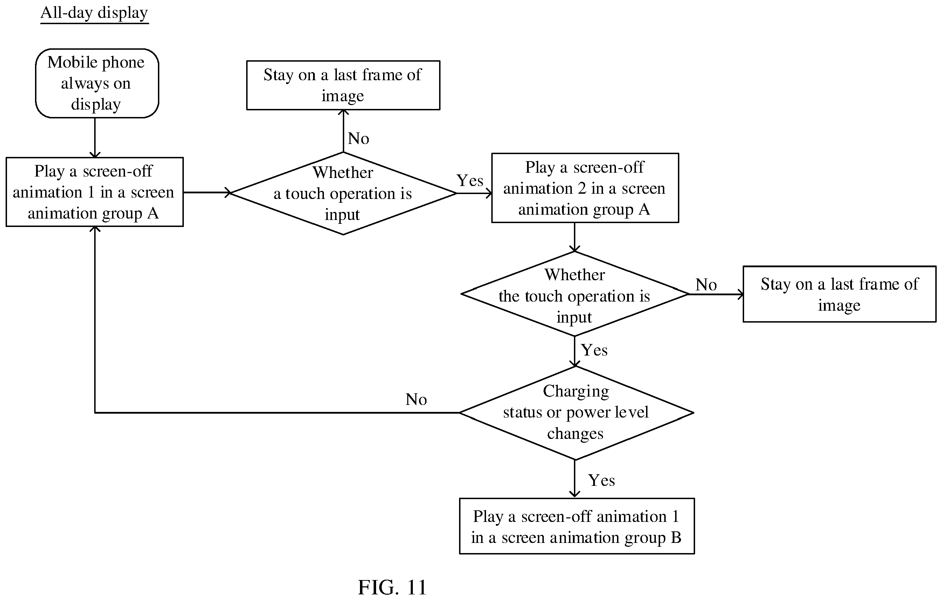

For example, when the display mode of the always on display function is all-day display, as shown in FIG. 11, after entering the screen-off state, the mobile phone may play the first screen-off animation in a corresponding screen-off animation group (for example, the screen-off animation group A) based on a current charging status and power information, that is, the screen-off animation 1. After playing of the screen-off animation 1 is completed, the mobile phone may freeze and display the last frame of image of the screen-off animation 1. That the mobile phone may freeze and display the last frame of image of the screen-off animation 1 means that the last frame of image of the screen-off animation 1 is continuously displayed. For example, the screen-off animation 1 is displayed in a display area 1 on the display. After playing of the screen-off animation 1 is completed, the mobile phone may refresh display content on the display at a specific frame rate, and display content in the display area 1 is the last frame of image of the screen-off animation 1 at each refresh. Subsequently, the mobile phone may monitor whether the user inputs a touch operation. If no touch operation input by the user is detected, the mobile phone may stay on the last frame of image of the screen-off animation 1 (that is, the last frame of image).

If a touch operation input by the user is detected, still as shown in FIG. 11, the mobile phone may play the second screen-off animation in the screen-off animation group A, that is, the screen-off animation 2. After playing of the screen-off animation 2 is completed, the mobile phone may freeze and display the last frame of image of the screen-off animation 2. For example, the screen-off animation group A includes only the screen-off animation 1 and the screen-off animation 2. Before playing of the screen-off animation 2 is completed, even if the mobile phone detects that the charging status of the mobile phone changes, or a level (that is, a power level) corresponding to the power information of the mobile phone changes, the mobile phone can still play the screen-off animation 2 or stay on the last frame of image of the screen-off animation 1, instead of playing a screen-off animation group corresponding to a new power level (or a charging status), so as to avoid a phenomenon that the image cannot be effectively connected after jumping to a new screen-off animation group.

After the mobile phone freezes and displays the last frame of image of the screen-off animation 2, still as shown in FIG. 11, if no touch operation input by the user is detected, the mobile phone may stay on the last frame of image of the screen-off animation 2. Correspondingly, if the touch operation input by the user is detected, the mobile phone can obtain a latest charging status and power information, and then determine whether a current charging status or a current power level of the mobile phone changes. If neither the current charging status nor the current power level of the mobile phone changes, the mobile phone may replay the screen-off animation 1 in the screen-off animation group A. Correspondingly, if the current charging status or the current power level of the mobile phone changes, the mobile phone may play the first screen-off animation in a corresponding screen-off animation group (for example, the screen-off animation group B).

For example, the first frame of image of the first screen-off animation in the screen-off animation group B may be the same as or similar to the last frame of image of the last screen-off animation in the screen-off animation group A. In this way, when the mobile phone is switched from the screen-off animation group A to the screen-off animation group B, the user can be provided with seamless visual experience.

Alternatively, when the first frame of image of the first screen-off animation in the screen-off animation group B is different from the last frame of image of the last screen-off animation in the screen-off animation group A, the mobile phone may play a corresponding transition screen-off animation before playing the screen-off animation group B, the first frame of image of the transition screen-off animation may be the same as or similar to the last frame of image of the last screen-off animation in the screen-off animation group A, and the last frame of image of the transition screen-off animation may be the same as or similar to the first frame of image of the first screen-off animation in the screen-off animation group B. In this way, a soft transition can be performed between the screen-off animation group A and the screen-off animation group B by using the transition screen-off animation, to prevent appearance of the screen-off animation 2 from being too abrupt, so as to improve the user's visual experience.

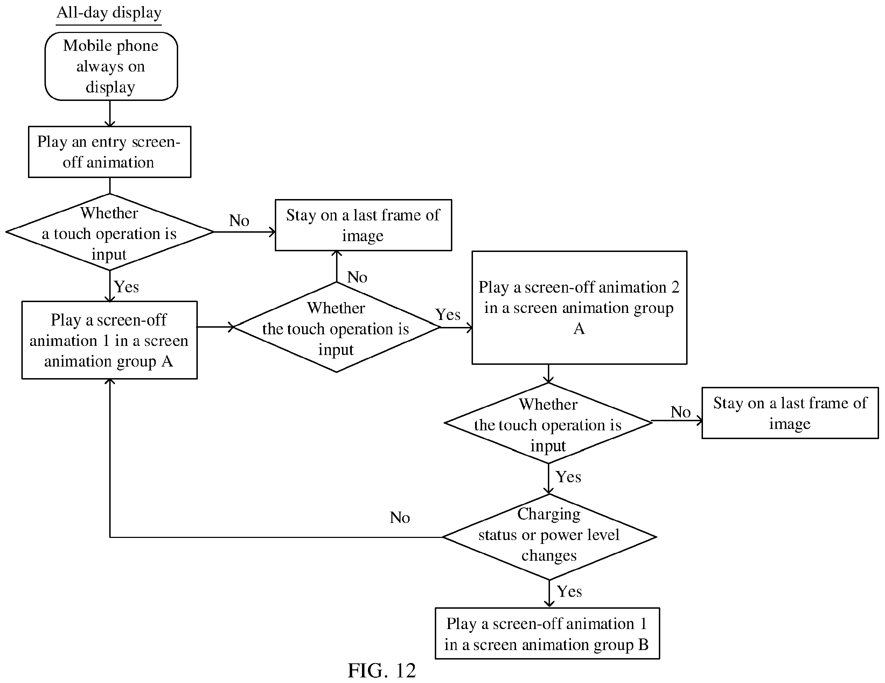

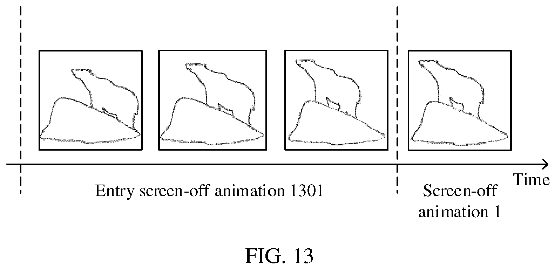

That the display mode of the always on display function is all-day display is still used as an example. In some other embodiments, after the mobile phone enters the screen-off state, an entry screen-off animation may be displayed first, and then a screen-off animation group corresponding to a current charging status and current power information is displayed. As shown in FIG. 12, unlike an always on display process shown in FIG. 11, after entering the screen-off state, the mobile phone may first display an entry screen-off animation corresponding to the screen-off animation group A. An entry screen-off animation 1301 is used as an example, as shown in FIG. 13, the entry screen-off animation 1301 may be a process in which the polar bear walks onto the ice. The last frame of image of the entry screen-off animation 1301 may be the same as or similar to the first frame of image of the entry screen-off animation 1 in the entry screen-off animation group A that is to be displayed subsequently. Subsequently, still as shown in FIG. 12, if the mobile phone detects the touch operation input by the user, the mobile phone may display the first screen-off animation (that is, the screen-off animation 1) in the screen-off animation group A corresponding to a current charging status and current power information. A subsequent process in which the mobile phone performs the always on display is similar to an always on display process without the entry screen-off animation in FIG. 11. Therefore, details are not described herein again.

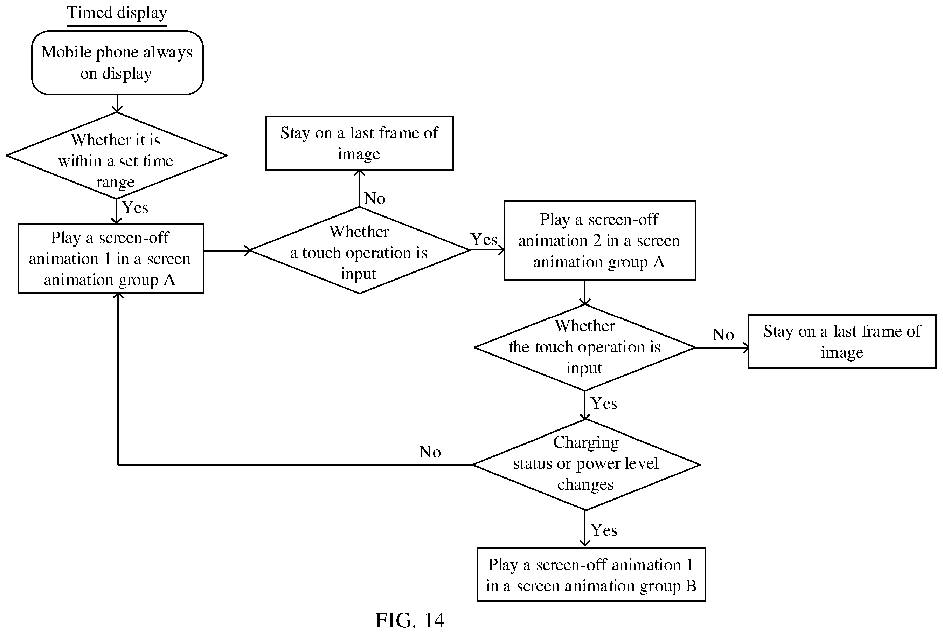

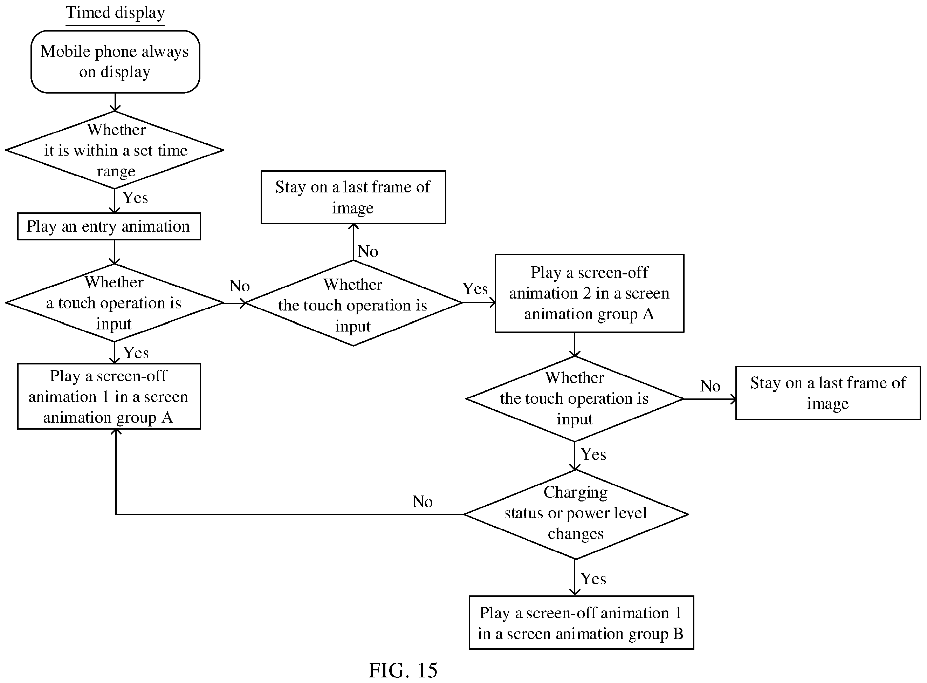

In some other embodiments, when the display mode of the always on display function is timed display, a method in which the mobile phone displays the screen-off animation group after the screen is off is similar to the foregoing method. A difference lies in that, as shown in FIG. 14, when entering the screen-off state, the mobile phone may determine whether a current time is within the time range set by the user. If the current time is within the time range set by the user, the mobile phone may perform always on display according to a related method shown in FIG. 11. Alternatively, as shown in FIG. 15, when entering the screen-off state, the mobile phone may determine whether a current time is within the time range set by the user. If the current time is within the time range set by the user, the mobile phone may display a corresponding screen-off animation according to the method shown in FIG. 12, and then display a screen-off animation group corresponding to a current charging status and current power information. Correspondingly, if the current time is not within the time range set by the user, after the screen is off, the mobile phone may enter the screen sleep state in a conventional manner.

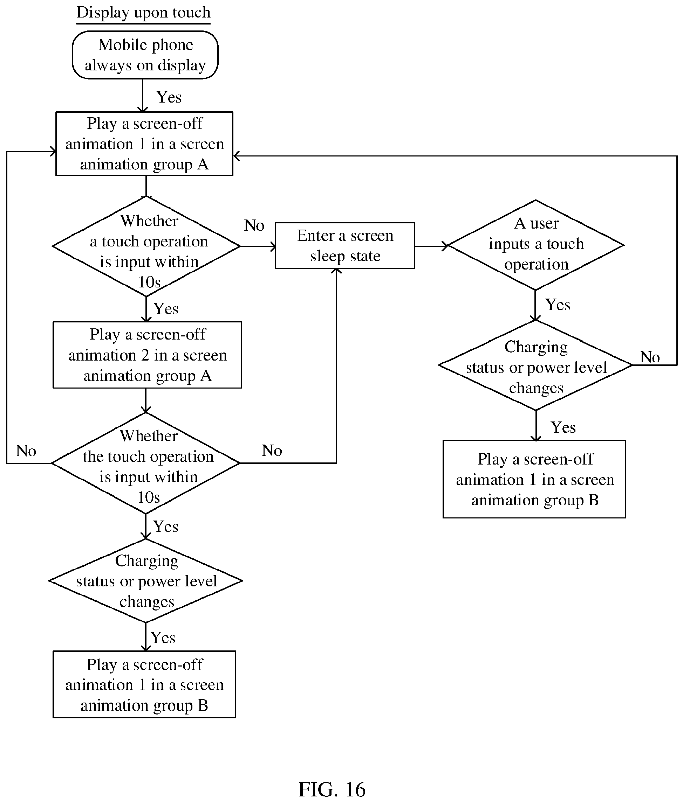

In some other embodiments, when the display mode of the always on display function is display upon touch, as shown in FIG. 16, after entering the screen-off state, the mobile phone may display the screen-off animation 1 in the screen-off animation group A based on a current charging status and current power information. After playing of the screen-off animation 1 is completed, the mobile phone may freeze and display the last frame of image of the screen-off animation 1. Further, the mobile phone may detect whether the touch operation input by the user is received within preset duration (for example, 10s).

Still as shown in FIG. 16, if the touch operation input by the user is detected within the preset duration, the mobile phone may play the screen-off animation 2 in the screen-off animation group A. After playing of the screen-off animation 2 is completed, the mobile phone may freeze and display the last frame of image of the screen-off animation 2. Similarly, after playing of the screen-off animation 2 is completed, the mobile phone may detect whether the touch operation input by the user is detected within the preset duration (for example, 10s). If no touch operation input by the user is detected, after the screen is off, the mobile phone may enter the screen sleep state in the conventional manner. If the touch operation input by the user is detected, the mobile phone can obtain a latest charging status and power information, and then determine whether a current charging status or a current power level of the mobile phone changes. If neither the current charging status nor the current power level of the mobile phone changes, the mobile phone may replay the screen-off animation 1 in the screen-off animation group A. Correspondingly, if the current charging status or the current power level of the mobile phone changes, the mobile phone may play the first screen-off animation in a corresponding screen-off animation group (for example, the screen-off animation group B).

After playing of the screen-off animation 1 is completed, if no touch operation input by the user is detected within the preset duration, as shown in FIG. 16, after the screen is off, the mobile phone may enter the screen sleep state in the conventional manner. Subsequently, if the mobile phone detects the touch operation input by the user in the screen sleep state, similar to the foregoing method, the mobile phone can obtain a latest charging status and power information, and then determine whether a current charging status or a current power level of the mobile phone changes. If neither the current charging status nor the current power level of the mobile phone changes, the mobile phone may replay the screen-off animation 1 in the screen-off animation group A. Correspondingly, if the current charging status or the current power level of the mobile phone changes, the mobile phone may play the first screen-off animation in a corresponding screen-off animation group (for example, the screen-off animation group B).

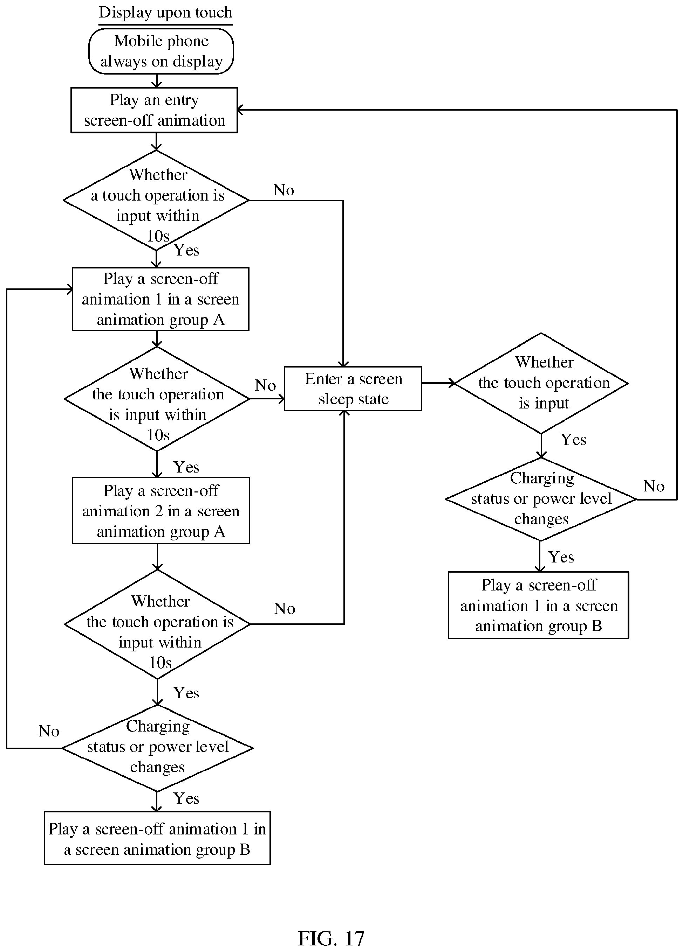

That the display mode of the always on display function is display upon touch is still used as an example. In some other embodiments, after the mobile phone enters the screen-off state, the entry screen-off animation may be displayed first, and then a screen-off animation group corresponding to a current charging status and current power information is displayed. As shown in FIG. 17, after entering the screen-off state, the mobile phone may first display the entry screen-off animation corresponding to the screen-off animation group A, for example, display the entry screen-off animation 1301 shown in FIG. 13. Further, after playing of the entry screen-off animation is completed, the mobile phone may stay on the last frame of image of the entry screen-off animation. Further, the mobile phone may detect whether the touch operation input by the user is received within the preset duration.

If the touch operation input by the user is detected within the preset duration after the entry screen-off animation is completed, still as shown in FIG. 17, the mobile phone may play the screen-off animation 1 in the screen-off animation group A corresponding to the current charging status and the current power information, and freeze the last frame of image of the screen-off animation 1 on the screen. Similarly, after playing of the screen-off animation 1 is completed, if the touch operation input by the user is detected within the preset duration, the mobile phone may play the screen-off animation 2 in the screen-off animation group A. After playing of the screen-off animation 2 is completed, the mobile phone may freeze and display the last frame of image of the screen-off animation 2. Similarly, after playing of the screen-off animation 2 is completed, the mobile phone may detect whether the touch operation input by the user is detected within the preset duration. If no touch operation input by the user is detected, after the screen is off, the mobile phone may enter the screen sleep state in the conventional manner. If the touch operation input by the user is detected, the mobile phone can obtain a latest charging status and power information, and then determine whether a current charging status or a current power level of the mobile phone changes. If neither the current charging status nor the current power level of the mobile phone changes, the mobile phone may replay the screen-off animation 1 in the screen-off animation group A. Correspondingly, if the current charging status or the current power level of the mobile phone changes, the mobile phone may play the first screen-off animation in a corresponding screen-off animation group (for example, the screen-off animation group B).

Correspondingly, still as shown in FIG. 17, if no touch operation input by the user is detected within the preset duration after playing of the entry screen-off animation is completed, the mobile phone may enter the screen sleep state. Alternatively, after playing of the screen-off animation 1 is completed, if no touch operation input by the user is detected within the preset duration, the mobile phone may enter the screen sleep state.

In the display mode of display upon touch, after the mobile phone enters the screen sleep state, as shown in FIG. 17, if the touch operation input by the user is detected, the mobile phone can obtain the latest charging status and power information, and then play the corresponding entry screen-off animation based on the current charging status or the current power level of the mobile phone. For example, if neither the current charging status nor the current power level of the mobile phone changes, the mobile phone may replay the entry screen-off animation corresponding to the screen-off animation group A (for example, the entry screen-off animation 1). Correspondingly, if the current charging status or the current power level of the mobile phone changes, for example, if the current charging status or the current power level of the mobile phone corresponds to the screen-off animation group B, the mobile phone may play the screen-off animation (for example, the screen-off animation 2) corresponding to the screen-off animation group B.

It may be learned that, regardless of whether the display mode of the screen display function is all-day display, timed display, or touch display, the mobile phone can select, based on a latest charging status and power information, a corresponding screen-off animation group for display in the screen-off state. In this way, the plurality of screen-off animations in the screen-off animation group can more intuitively and vividly transmit the latest charging status and power information to the user, to make always on display more real-time and interesting.

It should be noted that, in the foregoing embodiment, the screen-off animation group includes two screen-off animations is used as an example. It may be understood that if another screen-off animation (for example, the screen-off animation 3) is included in the screen-off animation group, the mobile phone may also perform always on display according to the foregoing method.

In addition, the touch operation in the foregoing embodiment may be a tapping operation or a double-tapping operation, or may be an operation such as a knuckle tapping or a stylus tapping. This is not limited in this embodiment of this application.

According to the invention, after the mobile phone enters the screen-off state, the mobile phone not only responds to the touch operation input by the user, but also captures a facial image or an eye image of the user. For example, after the mobile phone enters the screen-off state, the mobile phone can invoke the camera to start capturing an image. When a facial image or an eye image of the user is captured, it indicates that user's attention is probably being focused on the screen of the mobile phone. In this case, the mobile phone plays a corresponding interactive screen-off animation. A person or an animal in the interactive screen-off animation may present a status of interacting with the user in front of the screen.

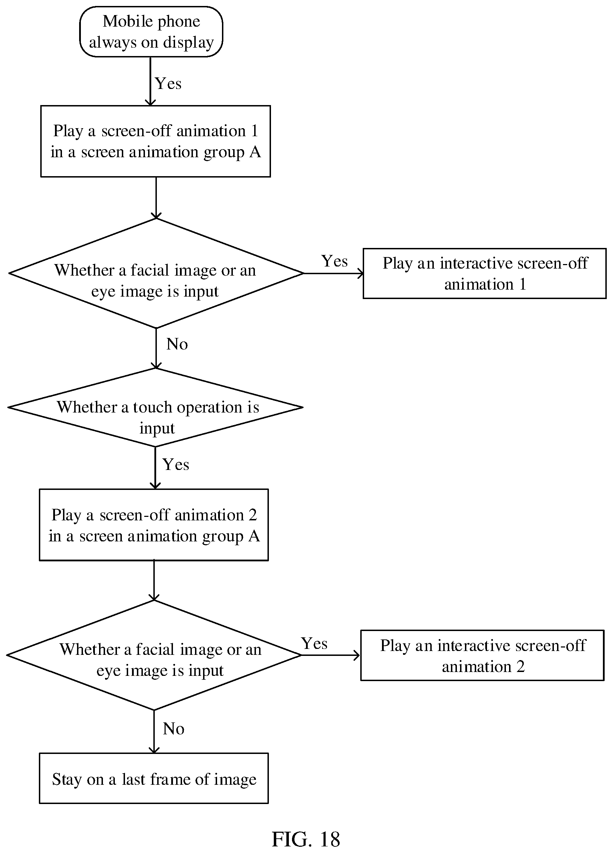

For example, as shown in FIG. 18, the mobile phone may play the screen-off animation 1 in the screen-off animation group A after entering the screen-off state, and then freeze and display the last frame of image of the screen-off animation 1. Subsequently, if a facial image or an eye image of the user is captured, the mobile phone may play an interactive screen-off animation 1 corresponding to the screen-off animation 1. The first frame of image of the interactive screen-off animation 1 may be the same or approximately the same as the last frame of image of the screen-off animation 1, and the last frame of image of the interactive screen-off animation 1 may be the same or approximately the same as the last frame of image of the screen-off animation 1.

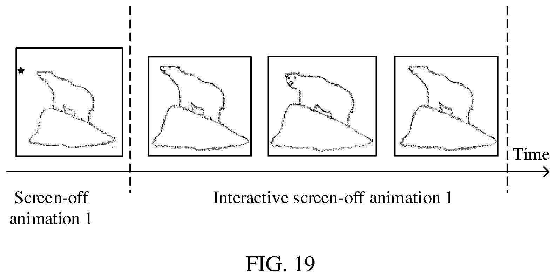

For example, as shown in FIG. 19, the interactive screen-off animation 1 may be a polar bear turning its head to look at the user and then turning back to stand on the ice. In this way, by capturing the facial image or eye image of the user, the mobile phone is triggered to play the interactive screen-off animation 1 when the screen is off, thereby enhancing interaction and interest between the user and the mobile phone.

Still as shown in FIG. 18, after the mobile phone freezes and displays the last frame of image of the screen-off animation 1, if the touch operation input by the user is detected, the mobile phone may play the screen-off animation 2 in the screen-off animation group A according to the method described in the embodiment, and then freeze and display the last frame of image of the screen-off animation 2. Subsequently, similar to the foregoing embodiment, if a facial image or an eye image of the user is captured, the mobile phone may play an interactive screen-off animation 2 corresponding to the screen-off animation 2. The first frame of image of the interactive screen-off animation 2 may be the same or approximately the same as the last frame of image of the screen-off animation 2, and the last frame of image of the interactive screen-off animation 2 may be the same or approximately the same as the last frame of image of the screen-off animation 2.

That is, the mobile phone may set a corresponding interactive screen-off animation for each screen-off animation in the screen-off animation group, and after playing any screen-off animation in the screen-off animation group, the mobile phone may play the corresponding interactive screen-off animation in response to a facial image or an eye image input by the user, thereby enhancing interaction and interest between the user and the mobile phone.

In some embodiments, after playing the corresponding interactive screen-off animation (for example, the interactive screen-off animation 1 or the interactive screen-off animation 2) each time, the mobile phone may freeze and display the last frame of image of the interactive screen-off animation. If the mobile phone detects the facial image or eye image of the user again during playing of the interactive screen-off animation or when playing of the interactive screen-off animation is completed, the mobile phone may play the interactive screen-off animation again. Alternatively, the mobile phone may not respond to the facial image or eye image input by the user and not play the interactive screen-off animation again, so as to reduce power consumption of the mobile phone. Subsequently, when the mobile phone detects the facial image or eye image input by the user again, the mobile phone may play the interactive screen-off animation again.

Alternatively, after playing of the interactive screen-off animation is completed, the mobile phone may start a timer of specific duration (for example, 5 minutes). If the mobile phone detects the facial image or eye image input by the user before the timer expires, the mobile phone does not need to play the interactive screen-off animation again. Correspondingly, after the timer expires, if the mobile phone detects the facial image or eye image input by the user, the mobile phone may play the interactive screen-off animation again.

Alternatively, the mobile phone may further dynamically play a corresponding interactive screen-off animation based on duration of the facial image or eye image input by the user. For example, when detecting the facial image or eye image input by the user, the mobile phone may play a process in which the polar bear turns its head to look at the user in the corresponding interactive screen-off animation 1; when the user continues to input the facial image or eye image, the mobile phone may display a process in which the polar bear looks at the user in the interactive screen-off animation 1; and when the mobile phone detects that the facial image or eye image of the user has gone, the mobile phone may display a process in which the polar bear turns back to stand on the ice in the interactive screen-off animation 1.

For example, if the mobile phone detects both the facial image (or the eye image) of the user and the touch operation input by the user when the mobile phone freezes and displays the last frame of image of a specific screen-off animation, the mobile phone may play the corresponding interactive screen-off animation in response to an event that the facial image (or the eye image) of the user is detected. In this case, the mobile phone does not need to respond to the touch operation input by the user. That is, the priority of the event that the facial image (or the eye image) of the user is detected may be higher than the priority of the event that the touch operation is detected. Certainly, the priority of the event that the touch operation is detected may be set to be higher than the priority of the event that the facial image (or the eye image) of the user is detected. This is not limited in this embodiment of this application.

In addition, if the mobile phone detects a touch operation input by the user or the facial image or the eye image of the user in the process of playing the screen-off animation (for example, the screen-off animation 1, the screen-off animation 2, or the interactive screen-off animation), the mobile phone may continue to play the screen-off animation being played without performing a response, to prevent interruption of the screen-off animation from affecting viewing experience of the user.

The forgoing embodiment is described by using an example in which the screen-off animation group includes two screen-off animations. It may be understood that any screen-off animation group may include three or more screen-off animations.

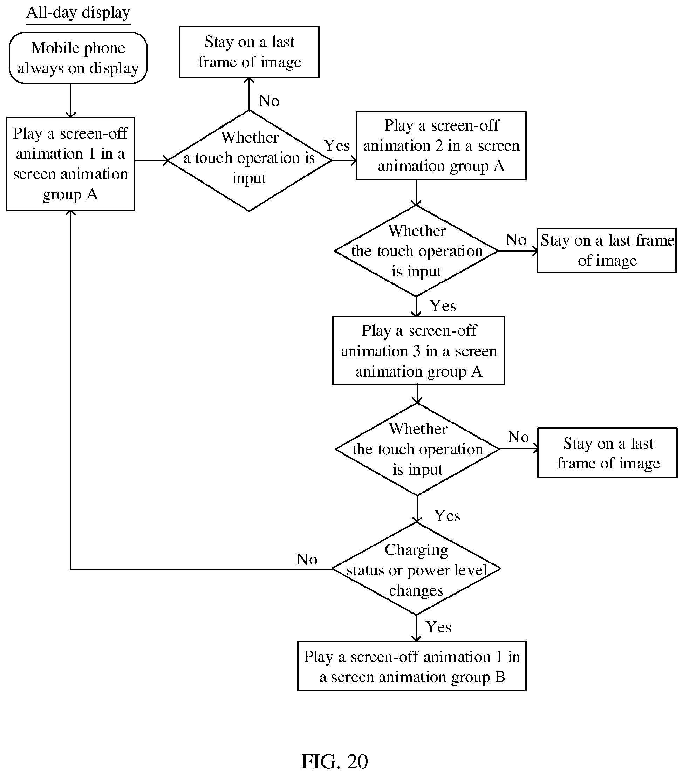

For example, the mode of always on display is all-day display. The screen-off animation group A may include the screen-off animation 1, the screen-off animation 2, and the screen-off animation 3. As shown in FIG. 20, after the screen is off, the mobile phone may play the screen-off animation 1 in the screen-off animation group A based on the current charging status and the current power information. After playing of the screen-off animation 1 is completed, the mobile phone may freeze and display the last frame of image of the screen-off animation 1. Further, if the touch operation input by the user is detected, the mobile phone may play the screen-off animation 2 in the screen-off animation group A, and then freeze and display the last frame of image of the screen-off animation 2. Further, if the touch operation input by the user is detected, the mobile phone may play the screen-off animation 3 in the screen-off animation group A, and then freeze and display the last frame of image of the screen-off animation 3.

Still as shown in FIG. 20, after the mobile phone freezes and displays the last frame of image of the screen-off animation 3, if the touch operation input by the user is detected, the mobile phone may obtain the latest charging status and power information of the mobile phone. If neither the current charging status nor the current power level of the mobile phone changes, the mobile phone may replay the screen-off animation 1 in the screen-off animation group A. Correspondingly, if the current charging status or the current power level of the mobile phone changes, the mobile phone may play the first screen-off animation in a corresponding screen-off animation group (for example, the screen-off animation 1 in the screen-off animation group B). That is, after all three screen-off animations in the screen-off animation group A are played, the mobile phone may display a screen-off animation in another screen-off animation group based on the latest charging status and power information.

Certainly, if the mode of always on display is timed display, or display upon touch, the mobile phone may also display the screen-off animation 1, the screen-off animation 2, and the screen-off animation 3 in the screen-off animation group A according to the method described above. This is not limited in this embodiment of this application.

In the foregoing embodiments, an example in which the charging status or power information of the mobile phone is used as the usage data of the mobile phone is used to illustrate how the mobile phone in the screen-off state displays a screen-off animation group associated with the usage data. In some other embodiments, the mobile phone may alternatively dynamically display different screen-off animation groups in the screen-off state based on another usage data (such as, a user step, whether music is being played, weather, or time).

For example, after the mobile phone detects the screen-off event, if the mobile phone is running a music APP, a screen-off animation group associated with a state of music being played may be displayed after the screen is off. Correspondingly, if the mobile phone is running no music APP, a screen-off animation group associated with a state of no music being played may be displayed after the screen is off. In this way, the user can vividly and visually know, through the plurality of screen-off animations in the screen-off animation group, a current state of whether the mobile phone is playing music.

For another example, the mobile phone may dynamically display different screen-off animation groups in the screen-off state in combination with various usage data of the mobile phone. For example, the mobile phone may display different screen-off animation groups by combining two types of usage data, namely the current power information and whether the music APP is running, so as to convey, to the user, a current usage status of the mobile phone, such as power of the mobile phone and whether music is being played.

In addition, when the mobile phone displays the screen-off animation or the screen-off animation group in the screen-off state, a display location of the screen-off animation or the screen-off animation group may be moved. For example, the mobile phone may periodically move the display location of the screen-off animation or the screen-off animation group based on a preset motion track at a period of 3s, to avoid a burn-in phenomenon caused by displaying the same or similar content at a specific location for a long time.

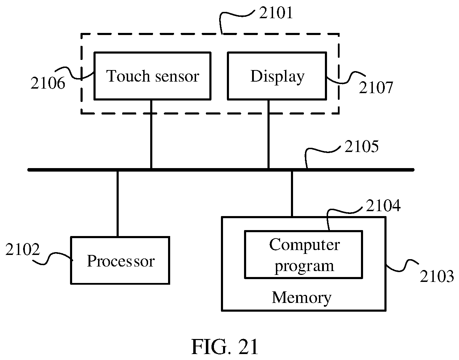

It should be noted that, although the foregoing embodiments are described by using an example in which a mobile phone performs always on display, it can be understood that the foregoing always on display method may also be applied to electronic devices such as a vehicle-mounted device, a tablet computer, and a watch, and all these devices can be used to implement the always on display method in the foregoing embodiments. This is not limited in this embodiment of this application. As shown in FIG. 21, an embodiment of this application discloses an electronic device, and the electronic device may be the foregoing mobile phone. The electronic device may specifically include: a touchscreen 2101, where the touchscreen 2101 includes a touch sensor 2106 and a display 2107; one or more processors 2102; a memory 2103; one or more applications (not shown); and one or more computer programs 2104. These various components may be connected via one or more communication buses 2105. The one or more computer programs 2104 are stored in the memory 2103 and are used to be executed by the one or more processors 2102. The one or more computer programs 2104 include instructions, and the instructions may be used to perform steps in the foregoing embodiments.

According to the descriptions of the implementations, a person skilled in the art may clearly understand that, for the purpose of convenient and brief description, only division of the foregoing function modules is used as an example for description. In the practical application, the functions may be allocated to and completed by different function modules according to requirements. That is, an internal structure of the apparatus is divided into different function modules, to complete all or some of the functions described above. For a detailed working process of the foregoing system, apparatus, and unit, reference may be made to a corresponding process in the foregoing method embodiments, and details are not described herein again.

Function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of embodiments of this application essentially, or the part contributing to the related art, or all or some of the technical solutions may be implemented in the form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of embodiments of this application. However, the protection scope of embodiments of this application is not limited thereto. Any change or replacement within the technical scope disclosed in embodiments of this application shall fall within the protection scope of embodiments of this application. Therefore, the protection scope of embodiments of this application shall be subject to the protection scope of the claims.

## Claims

1. An always on display method for an electronic device, the method comprising:
receiving, by the electronic device, a screen-off event;
in response to the screen-off event, entering, by the electronic device, a screen-off state;
displaying, by the electronic device, a first screen-off animation (A1) in a first screen-off animation group based on a charging status and power information of the electronic device;
**characterized in that**:
after the first screen-off animation ends,
detecting, by the electronic device, a first touch operation of a user; and
in response to the first touch operation, displaying, by the electronic device, a second screen-off animation (A2) in the first screen-off animation group, wherein
the first screen-off animation group comprises the first screen-off animation (A1) and the second screen-off animation (A2), wherein after the first screen-off animation (A1) ends, the method further comprises:
freezing and displaying, by the electronic device, a last frame of image of the first screen-off animation (A1); and
after the displaying, by the electronic device, the second screen-off animation (A2) in the first screen-off animation group, the method further comprises:
freezing and displaying, by the electronic device, a last frame of image of the second screen-off animation (A2), wherein after the freezing and displaying, by the electronic device, a last frame of image of the second screen-off animation (A2), the method further comprises:
detecting, by the electronic device, a second touch operation input by the user;
in response to the second touch operation, obtaining, by the electronic device, the charging status and the power information of the electronic device; and
when the charging status of the electronic device changes or a power level of the electronic device changes, playing, by the electronic device, a third screen-off animation (B1) in a corresponding second screen-off animation group; and
when the charging status of the electronic device does not change and the power level of the electronic device does not change, playing, by the electronic device, the first screen-off animation (A1), wherein a moving speed or a moving range of the respective screen-off animation is set dependent on the power level, wherein a low power level corresponds to a low moving speed or small moving range.

2. The method according to claim 1, wherein after the entering, by the electronic device, the screen-off state, before the displaying, by the electronic device, the first screen-off animation (A1) in the first screen-off animation group based on the charging status and power information of the electronic device, the method further comprises:
displaying, by the electronic device, a preset entry screen-off animation (1301), wherein a last frame of image of the entry screen-off animation (1301) is the same as a first frame of image of the first screen-off animation (A1).

3. The method according to any one of claims 1 or 2, wherein
the last frame of image of the first screen-off animation (A1) is the same as a first frame of image of the second screen-off animation (A2); or
an animation object in the first screen-off animation (A1) is the same as an animation object in the second screen-off animation (A2); or
an event performed by an animation object in the first screen-off animation (A1) is the same as an event performed by an animation object in the second screen-off animation (A2).

4. The method according to any one of claims 1 to 3, wherein after the displaying, by the electronic device, the first screen-off animation (A1) in the first screen-off animation group, the method further comprises:
when the electronic device captures a facial image or an eye image of the user, playing, by the electronic device, a first interactive screen-off animation, wherein a first frame of image of the first interactive screen-off animation is the same as the last frame of the first screen-off animation (A1); and
after the displaying, by the electronic device, the second screen-off animation (A2) in the first screen-off animation group, the method further comprises:
when the electronic device captures the facial image or the eye image of the user, playing, by the electronic device, a second interactive screen-off animation, wherein a first frame of image of the second interactive screen-off animation is the same as the last frame of image of the second screen-off animation (A2), wherein
animation objects in the first interactive screen-off animation and the second interactive screen-off animation each present a status of interacting with the user.

5. The method according to any one of claims 1 to 4, wherein the first screen-off animation group further comprises the third screen-off animation.

6. The method according to any one of claims 1 to 5, wherein the electronic device skips responding to the touch operation input by the user when the first screen-off animation (A1) or the second screen-off animation (A2) is played.

7. An electronic device, comprising:
a touch screen (2101), wherein the touch screen (2101) comprises a touch sensor (2106) and a display (2107);
one or more processors (2102); and
a memory (2103); wherein
the memory (2103) stores one or more computer programs (2104), the one or more computer programs (2104) comprises instructions, and when the instructions are executed by the electronic device, the electronic device is enabled to perform the always on display method according to any one of claims 1 to 6.

8. A computer-readable storage medium, wherein instructions are stored in the computer-readable storage medium, and when the instructions are executed on an electronic device, the electronic device is enabled to perform the always on display method according to any one of claims 1 to 6.

## Patentansprüche

1. Verfahren zur Anzeige bei ständig eingeschaltetem Bildschirm (Always-on-Display) für eine elektronische Vorrichtung, wobei das Verfahren umfasst:
Empfangen eines Bildschirm-Aus-Ereignisses durch die elektronische Vorrichtung;
als Reaktion auf das Bildschirm-Aus-Ereignis, Eintreten in einen Bildschirm-Aus-Zustand durch die elektronische Vorrichtung;
Anzeigen einer ersten Bildschirm-Aus-Animation (A1) aus einer ersten Bildschirm-Aus-Animationsgruppe durch die elektronische Vorrichtung basierend auf einem Ladestatus und Energieinformationen der elektronischen Vorrichtung;
**dadurch gekennzeichnet, dass**:
nachdem die erste Bildschirm-Aus-Animation endet,
Erkennen einer ersten Berührungsoperation eines Benutzers durch die elektronische Vorrichtung; und
als Reaktion auf die erste Berührungsoperation, Anzeigen einer zweiten Bildschirm-Aus-Animation (A2) aus der ersten Bildschirm-Aus-Animationsgruppe durch die elektronische Vorrichtung, wobei
die erste Bildschirm-Aus-Animationsgruppe die erste Bildschirm-Aus-Animation (A1) und die zweite Bildschirm-Aus-Animation (A2) umfasst, wobei das Verfahren nach dem Ende der ersten Bildschirm-Aus-Animation (A1) ferner umfasst:
Einfrieren und Anzeigen eines letzten Einzelbilds der ersten Bildschirm-Aus-Animation (A1) durch die elektronische Vorrichtung; und
nach dem Anzeigen der zweiten Bildschirm-Aus-Animation (A2) aus der ersten Bildschirm-Aus-Animationsgruppe durch die elektronische Vorrichtung, das Verfahren ferner umfasst:
Einfrieren und Anzeigen eines letzten Einzelbilds der zweiten Bildschirm-Aus-Animation (A2) durch die elektronische Vorrichtung, wobei das Verfahren nach dem Einfrieren und Anzeigen eines letzten Einzelbilds der zweiten Bildschirm-Aus-Animation (A2) durch die elektronische Vorrichtung ferner umfasst:
Erkennen einer zweiten vom Benutzer eingegebenen Berührungsoperation durch die elektronische Vorrichtung;
als Reaktion auf die zweite Berührungsoperation, Abrufen des Ladestatus und der Energieinformationen der elektronischen Vorrichtung durch die elektronische Vorrichtung; und
wenn sich der Ladestatus der elektronischen Vorrichtung ändert oder ein Leistungspegel der elektronischen Vorrichtung sich ändert, Abspielen einer dritten Bildschirm-Aus-Animation (B1) aus einer entsprechenden zweiten Bildschirm-Aus-Animationsgruppe durch die elektronische Vorrichtung; und
wenn sich der Ladestatus der elektronischen Vorrichtung nicht ändert und der Leistungspegel der elektronischen Vorrichtung sich nicht ändert, Abspielen der ersten Bildschirm-Aus-Animation (A1) durch die elektronische Vorrichtung, wobei eine Bewegungsgeschwindigkeit oder ein Bewegungsbereich der jeweiligen Bildschirm-Aus-Animation abhängig vom Leistungspegel eingestellt wird, wobei ein niedriger Leistungspegel einer niedrigen Bewegungsgeschwindigkeit oder einem kleinen Bewegungsbereich entspricht.

2. Verfahren nach Anspruch 1, wobei das Verfahren nach dem Eintreten der elektronischen Vorrichtung in den Bildschirm-Aus-Zustand und vor dem Anzeigen der ersten Bildschirm-Aus-Animation (A1) aus der ersten Bildschirm-Aus-Animationsgruppe durch die elektronische Vorrichtung basierend auf dem Ladestatus und den Energieinformationen der elektronischen Vorrichtung ferner umfasst:
Anzeigen einer voreingestellten Bildschirm-Aus-Eingangsanimation (1301) durch die elektronische Vorrichtung, wobei ein letztes Einzelbild der Bildschirm-Aus-Eingangsanimation (1301) identisch mit einem ersten Einzelbild der ersten Bildschirm-Aus-Animation (A1) ist.

3. Verfahren nach einem der Ansprüche 1 oder 2, wobei
das letzte Einzelbild der ersten Bildschirm-Aus-Animation (A1) identisch mit einem ersten Einzelbild der zweiten Bildschirm-Aus-Animation (A2) ist; oder
ein Animationsobjekt in der ersten Bildschirm-Aus-Animation (A1) identisch mit einem Animationsobjekt in der zweiten Bildschirm-Aus-Animation (A2) ist; oder
ein Ereignis, das von einem Animationsobjekt in der ersten Bildschirm-Aus-Animation (A1) ausgeführt wird, identisch mit einem Ereignis ist, das von einem Animationsobjekt in der zweiten Bildschirm-Aus-Animation (A2) ausgeführt wird.

4. Verfahren nach einem der Ansprüche 1 bis 3, wobei das Verfahren nach dem Anzeigen der ersten Bildschirm-Aus-Animation (A1) aus der ersten Bildschirm-Aus-Animationsgruppe durch die elektronische Vorrichtung ferner umfasst:
wenn die elektronische Vorrichtung ein Gesichtsbild oder ein Augenbild des Benutzers erfasst, Abspielen einer ersten interaktiven Bildschirm-Aus-Animation durch die elektronische Vorrichtung, wobei ein erstes Einzelbild der ersten interaktiven Bildschirm-Aus-Animation identisch mit dem letzten Einzelbild der ersten Bildschirm-Aus-Animation (A1) ist; und
nach dem Anzeigen der zweiten Bildschirm-Aus-Animation (A2) aus der ersten Bildschirm-Aus-Animationsgruppe durch die elektronische Vorrichtung das Verfahren ferner umfasst:
wenn die elektronische Vorrichtung das Gesichtsbild oder das Augenbild des Benutzers erfasst, Abspielen einer zweiten interaktiven Bildschirm-Aus-Animation durch die elektronische Vorrichtung, wobei ein erstes Einzelbild der zweiten interaktiven Bildschirm-Aus-Animation identisch mit dem letzten Einzelbild der zweiten Bildschirm-Aus-Animation (A2) ist, wobei
Animationsobjekte in der ersten interaktiven Bildschirm-Aus-Animation und der zweiten interaktiven Bildschirm-Aus-Animation jeweils einen Status der Interaktion mit dem Benutzer darstellen.

5. Verfahren nach einem der Ansprüche 1 bis 4, wobei die erste Bildschirm-Aus-Animationsgruppe ferner die dritte Bildschirm-Aus-Animation umfasst.

6. Verfahren nach einem der Ansprüche 1 bis 5, wobei die elektronische Vorrichtung das Reagieren auf die vom Benutzer eingegebene Berührungsoperation überspringt, wenn die erste Bildschirm-Aus-Animation (A1) oder die zweite Bildschirm-Aus-Animation (A2) abgespielt wird.

7. Elektronische Vorrichtung, umfassend:
einen Berührungsbildschirm (2101), wobei der Berührungsbildschirm (2101) einen Berührungssensor (2106) und eine Anzeige (2107) umfasst;
einen oder mehrere Prozessoren (2102); und
einen Speicher (2103); wobei
der Speicher (2103) ein oder mehrere Computerprogramme (2104) speichert, wobei das eine oder die mehreren Computerprogramme (2104) Anweisungen umfassen, und wenn die Anweisungen durch die elektronische Vorrichtung ausgeführt werden, die elektronische Vorrichtung in die Lage versetzt wird, das Always-on-Display-Verfahren nach einem der Ansprüche 1 bis 6 durchzuführen.

8. Computerlesbares Speichermedium, wobei Anweisungen in dem computerlesbaren Speichermedium gespeichert sind, und wenn die Anweisungen auf einer elektronischen Vorrichtung ausgeführt werden, die elektronische Vorrichtung in die Lage versetzt wird, das Always-on-Display-Verfahren nach einem der Ansprüche 1 bis 6 durchzuführen.

## Revendications

1. Procédé d'affichage permanent (always-on display) pour un dispositif électronique, le procédé comprenant :
la réception, par le dispositif électronique, d'un événement d'extinction d'écran ;
en réponse à l'événement d'extinction d'écran, l'entrée, par le dispositif électronique, dans un état d'écran éteint ;
l'affichage, par le dispositif électronique, d'une première animation d'écran éteint (A1) dans un premier groupe d'animations d'écran éteint sur la base d'un état de charge et d'informations d'alimentation du dispositif électronique ;
**caractérisé en ce que** :
après la fin de la première animation d'écran éteint,
la détection, par le dispositif électronique, d'une première opération tactile d'un utilisateur ; et
en réponse à la première opération tactile, l'affichage, par le dispositif électronique, d'une deuxième animation d'écran éteint (A2) dans le premier groupe d'animations d'écran éteint, dans lequel
le premier groupe d'animations d'écran éteint comprend la première animation d'écran éteint (A1) et la deuxième animation d'écran éteint (A2), dans lequel après la fin de la première animation d'écran éteint (A1), le procédé comprend en outre :
le gel et l'affichage, par le dispositif électronique, d'une dernière trame d'image de la première animation d'écran éteint (A1) ; et
après l'affichage, par le dispositif électronique, de la deuxième animation d'écran éteint (A2) dans le premier groupe d'animations d'écran éteint, le procédé comprend en outre :
le gel et l'affichage, par le dispositif électronique, d'une dernière trame d'image de la deuxième animation d'écran éteint (A2), dans lequel après le gel et l'affichage, par le dispositif électronique, d'une dernière trame d'image de la deuxième animation d'écran éteint (A2), le procédé comprend en outre :
la détection, par le dispositif électronique, d'une deuxième opération tactile saisie par l'utilisateur ;
en réponse à la deuxième opération tactile, l'obtention, par le dispositif électronique, de l'état de charge et des informations d'alimentation du dispositif électronique ; et
lorsque l'état de charge du dispositif électronique change ou qu'un niveau d'alimentation du dispositif électronique change, la lecture, par le dispositif électronique, d'une troisième animation d'écran éteint (B1) dans un deuxième groupe d'animations d'écran éteint correspondant ; et
lorsque l'état de charge du dispositif électronique ne change pas et que le niveau d'alimentation du dispositif électronique ne change pas, la lecture, par le dispositif électronique, de la première animation d'écran éteint (A1), dans lequel une vitesse de déplacement ou une plage de déplacement de l'animation d'écran éteint respective est réglée en fonction du niveau d'alimentation, dans lequel un faible niveau d'alimentation correspond à une faible vitesse de déplacement ou une petite plage de déplacement.

2. Procédé selon la revendication 1, dans lequel après l'entrée, par le dispositif électronique, dans l'état d'écran éteint, et avant l'affichage, par le dispositif électronique, de la première animation d'écran éteint (A1) dans le premier groupe d'animations d'écran éteint sur la base de l'état de charge et des informations d'alimentation du dispositif électronique, le procédé comprend en outre :
l'affichage, par le dispositif électronique, d'une animation d'écran éteint d'entrée prédéfinie (1301), dans lequel une dernière trame d'image de l'animation d'écran éteint d'entrée (1301) est identique à une première trame d'image de la première animation d'écran éteint (A1).

3. Procédé selon l'une quelconque des revendications 1 ou 2, dans lequel
la dernière trame d'image de la première animation d'écran éteint (A1) est identique à une première trame d'image de la deuxième animation d'écran éteint (A2) ; ou
un objet d'animation dans la première animation d'écran éteint (A1) est identique à un objet d'animation dans la deuxième animation d'écran éteint (A2) ; ou
un événement réalisé par un objet d'animation dans la première animation d'écran éteint (A1) est identique à un événement réalisé par un objet d'animation dans la deuxième animation d'écran éteint (A2).

4. Procédé selon l'une quelconque des revendications 1 à 3, dans lequel après l'affichage, par le dispositif électronique, de la première animation d'écran éteint (A1) dans le premier groupe d'animations d'écran éteint, le procédé comprend en outre :
lorsque le dispositif électronique capture une image faciale ou une image oculaire de l'utilisateur, la lecture, par le dispositif électronique, d'une première animation d'écran éteint interactive, dans lequel une première trame d'image de la première animation d'écran éteint interactive est identique à la dernière trame d'image de la première animation d'écran éteint (A1) ; et
après l'affichage, par le dispositif électronique, de la deuxième animation d'écran éteint (A2) dans le premier groupe d'animations d'écran éteint, le procédé comprend en outre :
lorsque le dispositif électronique capture l'image faciale ou l'image oculaire de l'utilisateur, la lecture, par le dispositif électronique, d'une deuxième animation d'écran éteint interactive, dans lequel une première trame d'image de la deuxième animation d'écran éteint interactive est identique à la dernière trame d'image de la deuxième animation d'écran éteint (A2), dans lequel
les objets d'animation dans la première animation d'écran éteint interactive et dans la deuxième animation d'écran éteint interactive présentent chacun un état d'interaction avec l'utilisateur.

5. Procédé selon l'une quelconque des revendications 1 à 4, dans lequel le premier groupe d'animations d'écran éteint comprend en outre la troisième animation d'écran éteint.

6. Procédé selon l'une quelconque des revendications 1 à 5, dans lequel le dispositif électronique ignore la réponse à l'opération tactile saisie par l'utilisateur lorsque la première animation d'écran éteint (A1) ou la deuxième animation d'écran éteint (A2) est lue.

7. Un dispositif électronique, comprenant :
un écran tactile (2101), dans lequel l'écran tactile (2101) comprend un capteur tactile (2106) et un écran d'affichage (2107) ;
un ou plusieurs processeurs (2102) ; et
une mémoire (2103) ; dans lequel
la mémoire (2103) stocke un ou plusieurs programmes informatiques (2104), lesdits un ou plusieurs programmes informatiques (2104) comprennent des instructions, et lorsque les instructions sont exécutées par le dispositif électronique, le dispositif électronique est activé pour mettre en œuvre le procédé d'affichage permanent selon l'une quelconque des revendications 1 à 6.

8. Support de stockage lisible par ordinateur, dans lequel des instructions sont stockées dans le support de stockage lisible par ordinateur, et lorsque les instructions sont exécutées sur un dispositif électronique, le dispositif électronique est activé pour mettre en œuvre le procédé d'affichage permanent selon l'une quelconque des revendications 1 à 6.
